# EUROPÄISCHE PATENTSCHRIFT

(11) **EP 2 794 159 B1**
(45) Veröffentlichungstag und Bekanntmachung des Hinweises auf die Patenterteilung: **31.03.2021**
(21) Anmeldenummer: 12856573.6
(22) Anmeldetag: 04.12.2012
(51) Int. Cl.: B23C 3/12, B23C 5/04

(54) **VERFAHREN UND UMFANGSFRÄSER ZUR BEARBEITUNG VON LÄNGSKANTEN VON METALLISCHEN WERKSTÜCKEN**
METHOD AND MILLING CUTTER FOR MACHINING LONGITUDINAL EDGES OF METAL WORKPIECES
PROCÉDÉ ET FRAISE POUR L'USINAGE D'ARÊTES LONGITUDINALES DE PIÈCES MÉTALLIQUES

(30) Priorität: 21.12.2011 AT 18632011
(43) Veröffentlichungstag der Anmeldung: 29.10.2014
(73) Patentinhaber: Pomikacsek, Josef, 3001 Mauerbach (AT)
(72) Erfinder: Pomikacsek, Josef, 3001 Mauerbach (AT)
(74) Vertreter: Fox, Tobias
(86) Internationale Anmeldenummer: PCT/AT2012/000304
(87) Internationale Veröffentlichungsnummer: WO 2013/090952

(56) Entgegenhaltungen:
- WO-A1-95/20071
- DE-A1- 3 435 352
- DE-C1- 3 717 702
- JP-A- S5 771 716
- JP-A- S6 244 305
- US-A- 1 587 962
- DATABASE WPI Week 198804 Thomson Scientific, London, GB; AN 1988-027319 -& SU 1 316 756 A (ZHDANOV METAL INST) 15 June 1987 (1987-06-15)

## Beschreibung

Die Erfindung betrifft ein Verfahren zur Bearbeitung von Längskanten von metallischen Werkstücken durch einen Umfangsfräser mit mindestens einer spiralförmig ausgebildeten Schneidkante, wobei eine Bearbeitungsfläche des Werkstückes durch die mindestens eine Schneidkante des Umfangsfräsers gleichzeitig mit mehreren Zähnen kontaktiert wird. Die Erfindung betrifft ferner einen Umfangsfräser zur Bearbeitung von Längskanten von metallischen Werkstücken mit einer Drehachse und einer Gesamtlänge sowie mit mindestens einer spiralförmig ausgebildeten Schneidkante, wobei mit der mindestens einen Schneidkante des Umfangsfräsers eine Bearbeitungsfläche eines Werkstückes gleichzeitig mit mehreren Zähnen der mindestens einen Schneidkante kontaktierbar ist. Schließlich betrifft die Erfindung auch ein Stufenwerkzeug mit einem solchen Umfangsfräser sowie eine Vorrichtung mit einem Umfangsfräser oder Stufenwerkzeug.

Die Bearbeitung von Werkstücklängskanten mit Hilfe eines Umfangsfräsers ist bekannt. Gemäß dem Stand der Technik wird die Aufgabe in Verbindung mit hohen Schnittgeschwindigkeiten und langen Spänen bewältigt. Die Schnittgeschwindigkeit ist üblicherweise wesentlich höher als die Vorschubgeschwindigkeit. Die praktisch erzielbaren Vorschubgeschwindigkeiten liegen üblicherweise unterhalb von 100 m/min, teilweise in Verbindung mit schlechten Standzeiten und geringer Wirtschaftlichkeit. Ein Bedarf an Erhöhung der Vorschubgeschwindigkeiten und Verbesserung der Wirtschaftlichkeit liegt in mehreren Anwendungsbereichen vor. Die gleichzeitig im Eingriff befindlichen Zähne der bekannten Werkzeuge kontaktieren das Werkstück mit unterschiedlichen Schnittiefen und bewegen sich auf Schnittbögen. Infolgedessen sind die Bearbeitungsflächen mit Riffeln behaftet, welche oft anwendungstechnische Nachteile verursachen.

Aus der Patentschrift AT 301989 ist eine Ausführung mit einem Umfangsfräser zur Bearbeitung der Längskanten von zwischen Führungsrollen geführten Blechbändern bekannt. Die Drehachse des Werkzeuges ist zur Blechebene senkrecht angeordnet. Die Schneidkanten kontaktieren die Bearbeitungsfläche zur Vorschubrichtung dem Flugkreis entsprechend gleich- oder gegenläufig. Es entstehen dabei kommaförmige Späne, welche zwangsläufig im Verhältnis zu ihrer Länge nur geringe Abstände des jeweiligen Zähnevorschubes ermöglichen. So entsteht eine Schnittgeschwindigkeit, welche wesentlich höher als die Vorschubgeschwindigkeit ist. Obwohl der Bedarf an hohen Arbeitsgeschwindigkeiten teilweise die technologisch möglichen Grenzwerte der Schnittgeschwindigkeit übersteigt, können solche Aufgaben mit den bekannten Verfahren nicht gelöst werden.

Aus der DE 3435352 A1 ist ein Umfangsfräser zur Bearbeitung von Längskanten mit spiralförmigen Schneiden bekannt. Die Schneiden des Werkzeuges sind zur Drehachse in einem vorbestimmten Winkel angeordnet. Die Drehachse ist so geneigt, daß während dem Eingriff die Lage der Schneidkanten zur Blechebene senkrecht ist. Der elliptische Schnittbogen der Schneiden an der Bearbeitungsfläche ist auf solche Weise flacher als ihr Flugkreis, wodurch lange Späne erzielt werden können. Ähnlich zum bereits geschilderten Fall ist die Schnittgeschwindigkeit hierbei auch wesentlich höher als die Vorschubgeschwindigkeit. Die Bearbeitungsfläche ist aber entsprechend den Schnittbögen mit Wellen behaftet, was unter Umständen den Bedarf einer Nachbearbeitung notwendig macht. Die DE 3435352 A1 offenbart somit ein Verfahren mit den Merkmalen des Oberbegriffs des unabhängigen Anspruchs 1.

Aus der JP S57 71716 A sind zylindrische Umtangsträser mit den Merkmalen des Oberbegriffs des unabhängigen Anspruchs 4 bekannt, deren Rotationsachse senkrecht zur zu bearbeitenden Kante des Werkstückes und zur Vorschubrichtung des Werkstückes liegt. Nachteilig ist hier erneut, daß die Bearbeitungsfläche mit Schnittbögen behaftet ist.

Die Erfindung zielt darauf ab, ein Verfahren und eine Vorrichtung zum Bearbeiten der Längskanten von Werkstücken zu schaffen, die auf eine einfache und kostengünstige Weise die Bearbeitung mit hohen Vorschubgeschwindigkeiten bei gleichzeitig niedrigen Schnittgeschwindigkeiten in Verbindung mit langen Standzeiten der Schneiden ermöglichen. Diese Aufgabe wird durch ein Verfahren gemäß dem unabhängigen Anspruch 1 gelöst, bei dem die Bearbeitungsfläche durch die mehreren in der Vorschubrichtung wirkenden Zähne der mindestens einen Schneidkante gleichzeitig in gleichmäßigen Abständen kontaktiert wird, und daß während der Bearbeitung des Werkstückes alle Schneidkanten mit der Bearbeitungsfläche über eine Wirklänge und mit einer gleichen Schnittiefe in Eingriff versetzt werden, und das Abtrennen der Späne jeweils über eine Länge des Werkstückes, die dem Zahnabstand entspricht, zwischen den benachbarten Zähnen gleichzeitig mit deren Bewegung entlang der Wirklänge in Vorschubrichtung erfolgt.

Zur Bearbeitung der Längskanten von Werkstücken wird somit ein Umfangsfräser mit mindestens einer spiralförmig, mit kleinem Steigungswinkel ausgebildeten Schneidkante vorgesehen, welche die Bearbeitungsfläche gleichzeitig mit mehreren in der Vorschubrichtung wirkenden Zähnen mit der gleichen Schnittiefe in gleichmäßigen Abständen kontaktiert. Der Umfangsfräser wird so in Drehung versetzt, daß infolge der Relativgeschwindigkeit zwischen dem Werkstück und den Zähnen im Schnittbereich das Abtrennen der Späne jeweils in einer Länge der Zahnabstände gleichzeitig mit der Bewegung der Schneidkante entlang der Eingriffslänge erfolgt.

Die obengenannte Aufgabe wird ebenfalls durch einen Umfangsfräser gemäß dem unabhängigen Anspruch 4 gelöst. Der erfindungsgemäße Umfangsfräser ist über eine erste Länge der Gesamtlänge konisch und in einem zweiten Abschnitt der Gesamtlänge bzw. der Wirklänge zylinderförmig ausgebildet, wobei der Durchmesser der Umfangsfräsers im Bereich der Wirklänge dem maximalen Durchmesser im Bereich der Länge entspricht. Es wird somit erfindungsgemäß im Gegensatz zu anderen Fräsverfahren eine mehrfach höhere Vorschubgeschwindigkeit als die jeweilige Zerspanungsgeschwindigkeit erzielt. Die Bearbeitungsfläche ist sodann frei von Riffeln.

Aufgrund der vorbestimmten Beziehung zwischen der drehzahlbedingten Bewegungsgeschwindigkeit der Schneiden und der Vorschubgeschwindigkeit wird erfindungsgemäß der Schnitt jeweils in einer Länge des Schneidkantenabstandes erzeugt. Während des Schnittes bewegt sich die Schneidkante über die Bearbeitungsfläche entlang der gesamten Kontaktlänge des Werkzeuges mit einer zum Längsvorschub ähnlichen Geschwindigkeit. Die Schnittgeschwindigkeit entsteht aus deren Differenz und ist wesentlich niedriger als die Vorschubgeschwindigkeit. Da alle Schneiden mit der gleichen Schnittiefe wirken, ist die Bearbeitungsfläche glatt und frei von Restwellen.

Die Einstellung der drehzahlabhängigen Geschwindigkeit der Schneidkanten an der Bearbeitungsfläche erfolgt in Abhängigkeit von der üblicherweise veränderlichen Vorschubgeschwindigkeit und der konstanten Werkzeugdimensionen. Diese Aufgabe kann vorzugsweise durch eine elektronische Steuerung gelöst werden, welche durch kontinuierliche Erfassung der Vorschubgeschwindigkeit mit Hilfe einer Recheneinheit die zur Durchführung der beschriebenen Funktion notwendige Drehzahl einstellt.

Die geschilderten Merkmale ermöglichen im Vergleich zu anderen Umfangsfräser eine Vielzahl von einander unterstützenden Vorteilen, insbesondere die signifikante Erhöhung der Vorschubgeschwindigkeit bei deutlicher Verringerung der Schnittgeschwindigkeit. Dies sind wesentliche Voraussetzungen zur wirtschaftlichen Lösung von Aufgaben bei der Bearbeitung von Längskanten mit besonders hohen Vorschubgeschwindigkeiten.

Gemäß den neuen Verfahrensmerkmalen besteht die Möglichkeit zur Begrenzung der Spanlänge auf das Maß des Abstandes zwischen zwei Werkzeugzähnen. Die kurzen Späne können leicht entsorgt und mit günstiger Raumausnutzung gelagert werden.

Es bestehen vielseitige Gestaltungsmöglichkeiten für das Werkzeug. Die Schneidkanten können in Form von ein- oder mehrgängigen Spiralen ausgebildet werden. Die auf die Bearbeitungsfläche gleichzeitig einwirkenden Schneidkanten können auf zylinderförmigen oder konischen Umfangsfräser zum Einsatz gebracht werden.

Die Erfindung wird nachfolgend anhand von Ausführungsbeispielen unter Bezug auf die Zeichnungen näher erläutert. Es zeigen:
Fig. 1 eine schematische Darstellung eines Ausführungsbeispieles eines Umfangsfräsers gemäß der Erfindung mit dem Werkstück in Vorderansicht;
Fig. 2 die in Fig. 1 dargestellte Ausführung in schematischer Draufsicht;
Fig. 3 eine vergrößerte Darstellung der Bearbeitungsfläche mit den Schneidkanten der in Fig. 1 und 2 dargestellten Ausführung;
Fig. 4 eine vergrößerte Darstellung der Bearbeitungsfläche mit den Schneidkanten einer Ausführung, welche mit höherer Schneidkantengeschwindigkeit als die Vorschubgeschwindigkeit arbeitet;
Fig. 5 eine schematische Darstellung eines Stufenwerkzeuges gemäß der Erfindung;
Fig. 6 eine schematische Darstellung eines Umfangsfräsers gemäß der Erfindung zur Bearbeitung von tangentialen Teilbereichen der Lauffläche von Bahnschienen.

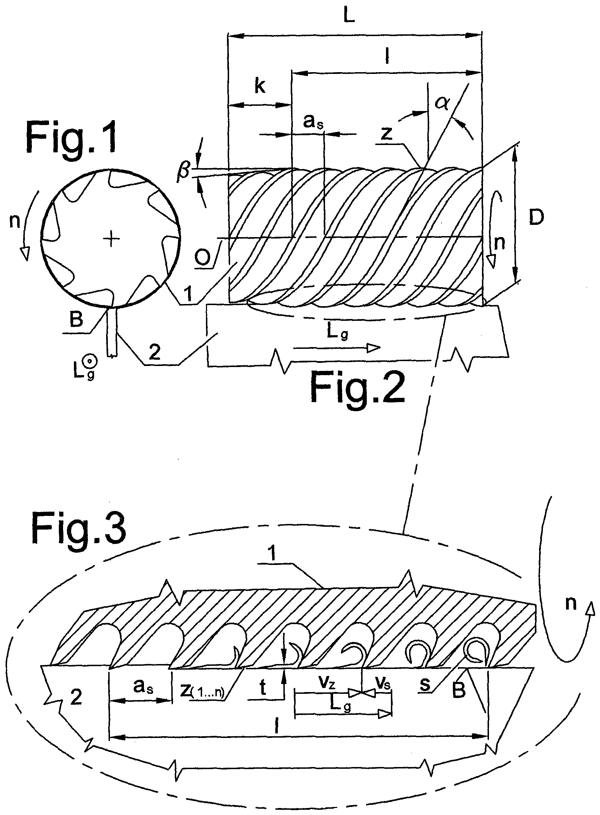

In Fig. 1 sind ein Umfangsfräser 1 gemäß der Erfindung und ein Werkstück 2 schematisch in einer Vorderansicht dargestellt.

Fig. 2 zeigt den in Fig. 1 dargestellten Umfangsfräser 1 gemäß der Erfindung und ein Werkstück 2 in einer schematischen Draufsicht. Die Drehachse O des zylindrischen Umfangsfräsers 1 ist zur Bearbeitungsfläche B parallel so angeordnet, daß gleichzeitig alle spiralförmig ausgebildeten Schneidkanten z mit der Bearbeitungsfläche B über eine Länge l in Eingriff stehen. Die Schneidkanten sind mehrgängig jeweils mit einem Steigungswinkel α so ausgebildet, daß zwischen den Schneidkanten z ein gleichmäßiger Zahnabstand aₛ entsteht. Der Umfangsfräser 1 ist im Bereich der Vorschubrichtung L_{g} zugewandten Seite über die Länge k entsprechend dem Winkel β konisch ausgebildet, damit ein sanfter Eingriff der Schneiden aus dem schnittlosen Zustand gewährleistet wird.

Der Umfangsfräser besteht jeweils aus einem zylindrischen Bereich l und aus einem konischen Bereich k, welche eine Gesamtwerkzeuglänge L ergeben. Der Umfangsfräser 1 wird in Richtung n in vorbestimmter Weise in Drehung gesetzt, so daß sich die Schneidkanten zur Vorschubrichtung L_{g} gleichsinnig, jedoch geringfügig langsamer als die Vorschubgeschwindigkeit bewegen.

In Fig. 3 ist der Eingriffsbereich des in Fig. 1 dargestellten Umfangsfräsers ersichtlich. Die Schnittgeschwindigkeit vₛ entsteht aus der Differenz der Vorschubgeschwindigkeit L_{g} und der Bewegungsgeschwindigkeit der Schneiden v_{z} im Bereich der mit einer Schnittiefe t beaufschlagten Bearbeitungsfläche B. Die beiden Geschwindigkeiten können vorzugsweise relativ zueinander so festgelegt werden, daß der zwischen zwei Schneiden gelegene Schnittweg aₛ beim Absolvieren des vollen Eingriffsweges l des Werkzeuges mit gleichzeitiger Trennung der Spanes s von der Bearbeitungsfläche B zwischen den angedeuteten Schneidenpositionen erzielt wird. Der Grenzzustand dieser Funktionsweise beruht auf der Gleichheit des Zeitaufwandes einerseits der Schneidkantenbewegung v_{z} entlang des Eingriffsweges l, und anderseits der Schnittbewegung vₛ im Bereich eines Zahnabstandes as. Die Bewegungen können mit Hilfe einer elektronischen Steuerung aufeinander abgestimmt werden. Aufgrund der elektronisch erfaßten Vorschubgeschwindigkeit L_{g} kann mit Hilfe einer Recheneinheit die Werkzeugdrehzahl n zur Gewährleistung des Vorganges geregelt werden.

Im Vergleich zu den bekannten Fräsverfahren hat das erfindungsgemäße Verfahren die vorteilhafte Eigenschaft, daß die Spanlängen den Zahnabstand as nicht übersteigen, so daß der Einsatz von Umfangsfräsern mit kleinem Zahnabstand und mit hoher Zähnezahl begünstigt wird.

Durch den Einsatz von kleinen Zahnabständen an einem Messerkopf kann die Zahl der im Schnitt befindlichen Zähne z im Eingriffsweg l erhöht werden. So kann im Vergleich zu einer Auslegung mit kleinerer Zähnezahl bei gleichbleibender Vorschubgeschwindigkeit L_{g} eine Verminderung der Schnittgeschwindigkeit vₛ erzielt werden. Die höhere Zahl von Schneiden erbringt zusätzlich eine wirksame Verteilung der Schnittenergie. Aufgrund der gekrümmten Form des Werkzeugmantels entsteht die Bearbeitungsfläche in Form einer Längsrille mit geringer Tiefe. In Abhängigkeit vom gewählten Werkzeugdurchmesser D und von der Breite der Bearbeitungsfläche läßt sich die Abweichung im Vergleich zu einer Planfläche minimieren und ist zu vernachlässigen.

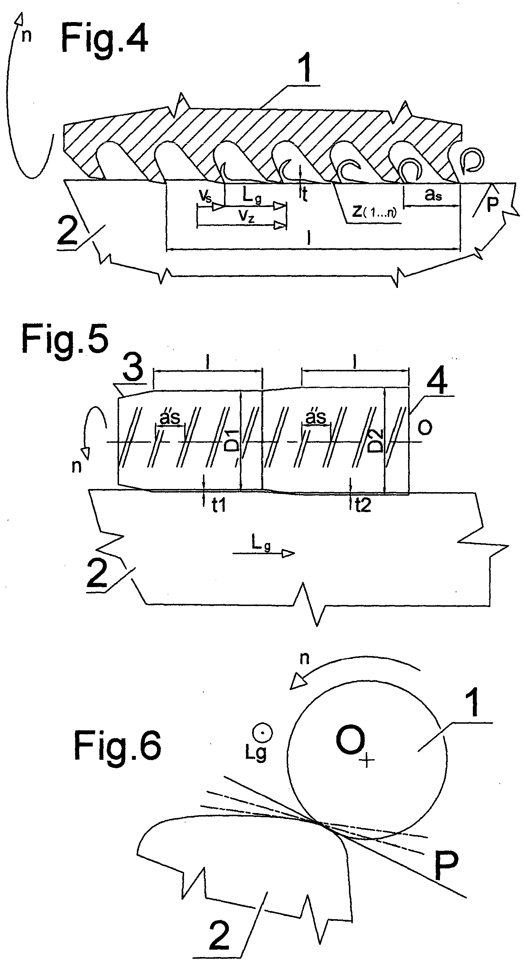

In Fig. 4 ist der Eingriffsbereich eines Umfangsfräsers 1 ersichtlich, dessen Schneidengeschwindigkeit v_{z} größer als die Vorschubgeschwindigkeit L_{g} ist. Die Schnittgeschwindigkeit vₛ entsteht aus der Differenz der genannten Komponenten. Das Abtrennen der Späne s erfolgt vorzugsweise mit einer der Bearbeitungstiefe t entsprechenden Spanstärke s gleichzeitig mit der Bewegung der Schneidkanten entlang der Bearbeitungskante B. Der Schnittweg entspricht dem um einen Zahnabstand as erhöhten Maß der zylindrischen Länge l des Werkzeuges 1. Die Vorteile im Zusammenhang mit den kurzen Spänen s und mit den niedrigen Zerspanungsgeschwindigkeiten s_{z} in Verbindung mit hohen Vorschubgeschwindigkeiten L_{g} treten auch bei dieser Auslegungsvariante auf.

In Fig. 5 ist ein Ausführungsbeispiel eines Stufenwerkzeuges gemäß der Erfindung schematisch dargestellt. Durch einfache Weiterbildung der anhand der Figuren 1 bis 4 beschriebenen Merkmale kann ein zwei- oder mehrstufiges Werkzeug ausgestaltet werden, mit welchem Bearbeitungsfälle, bei denen die notwendige Bearbeitungstiefe t größer als die zulässige Spanstärke ist, bewältigt werden können. Es werden dabei zwei oder mehr Werkzeuge 1 auf der gleichen Drehachse O montiert. Die Funktion ist aufgrund der Gleichheit der Zahnabstände und der Wirklängen 1 der Werkzeuge gewährleistet. Die Durchmesser der Umfangsfräser sind entsprechend den Spanstärken unterschiedlich getroffen.

Fig. 6 ist eine schematische Darstellung eines gemäß der Erfindung ausgeführten Umfangsfräsers 1, der zur Bearbeitung von tangentialen Teilbereichen von gekrümmten Fahrflächenprofilen von Bahnschienen eingesetzt wird. Das Werkzeug 1, dessen spiralförmige Schneidkanten in einer zu seiner Drehachse O parallelen Lage die Bearbeitungsfläche kontaktieren, ähnlich wie in den Fig. 1 bis 5, werden tangential zu einer der Bearbeitungsspuren der Schienenfahrfläche angeordnet. Zwischen dem Umfangsfräser 1 und dem Werkstück 2 wird parallel zur Bearbeitungsfläche B eine Relativbewegung mit der Vorschubgeschwindigkeit L_{g} entlang der Bearbeitungsfläche B ausgeführt. Die Bearbeitung der gekrümmten Fahrkante erfolgt mit einer zum Schienenprofil tangential verlaufenden Schnittspur.

Beim Einsatz von Schienen entstehen auf deren Fahrfläche geometrische und metallurgische Fehler, welche einen schädlichen Einfluß auf die Standzeit und Fahrqualität haben. Die Schienen werden durch Abarbeiten der fehlerhaften Zonen und Deformationen regeneriert. Zur Durchführung dieser Tätigkeit werden unter anderem Umfangsfrästechnologien verwendet, welche niedrige Produktivität und niedrige Arbeitsgeschwindigkeiten, in der Regel unterhalb von 3 km/h, aufweisen. Diese Werte können jedoch mit hohen Schnittgeschwindigkeiten erreicht werden, welche in Verbindung mit geringen Standzeiten hohe Bearbeitungskosten ergeben. Der Einsatz des erfindungsgemäßen Fräsverfahrens ist verfahrenstechnisch und wirtschaftlich vorteilhaft und ermöglicht eine mehrfach höhere Produktivität, welche die Aufgabe mit der Geschwindigkeit eines langsam fahrenden Zuges löst. So kann das Regenerieren der Schienen ohne gleissperrbedingten Ausfall des Bahnbetriebes innerhalb des Fahrplanes durchgeführt werden.

## Patentansprüche

1. Verfahren zur Bearbeitung von Längskanten von metallischen Werkstücken (2) durch einen Umfangsfräser (1) mit mindestens einer spiralförmig ausgebildeten Schneidkante, wobei eine Bearbeitungsfläche (B) des Werkstückes (2) durch die mindestens eine Schneidkante (z) des Umfangsfräsers gleichzeitig mit mehreren Zähnen kontaktiert wird, **dadurch gekennzeichnet, daß** die Bearbeitungsfläche (B) durch die mehreren in der Vorschubrichtung wirkenden Zähne der mindestens einen Schneidkante gleichzeitig in gleichmäßigen Abständen (aₛ) kontaktiert wird, und daß während der Bearbeitung des Werkstückes (2) alle Schneidkanten (z) mit der Bearbeitungsfläche (B) über eine Wirklänge (l) und mit einer gleichen Schnittiefe (t) in Eingriff versetzt werden, und das Abtrennen der Späne (s) jeweils über eine Länge des Werkstückes (2), die dem Zahnabstand (aₛ) entspricht, zwischen den benachbarten Zähnen gleichzeitig mit deren Bewegung entlang der Wirklänge (l) in Vorschubrichtung erfolgt.

2. Verfahren nach Anspruch 1, **dadurch gekennzeichnet, daß** die Bewegungsgeschwindigkeit (v_{z}) der Schneiden des Umfangsfräsers (1) niedriger als die Vorschubgeschwindigkeit (L_{g}) ausgelegt ist.

3. Verfahren nach Anspruch 1, **dadurch gekennzeichnet, daß** die Bewegungsgeschwindigkeit (v_{z}) der Schneiden des Umfangsfräsers (1) höher als die Vorschubgeschwindigkeit (L_{g}) ausgelegt ist.

4. Umfangsfräser (1) zur Bearbeitung von Längskanten von metallischen Werkstücken (2) mit einer Drehachse (O) und einer Gesamtlänge (L) sowie mit mindestens einer spiralförmig ausgebildeten Schneidkante (z), wobei mit der mindestens einen Schneidkante (z) des Umfangsfräsers eine Bearbeitungsfläche (B) eines Werkstückes (2) gleichzeitig mit mehreren Zähnen der mindestens einen Schneidkante (z) kontaktierbar ist, **dadurch gekennzeichnet, daß** der Umfangsfräser (1) über eine erste Länge (k) der Gesamtlänge (L) konisch und in einem zweiten Abschnitt der Gesamtlänge (L) zylinderförmig ausgebildet ist, wobei der Durchmesser (D) des Umfangsfräsers (1) im zweiten Abschnitt (l) der Gesamtlänge (L) dem maximalen Durchmesser im Bereich der ersten Länge (k) entspricht, und wobei sich die mindestens eine Schneidkante (z) sowohl über die erste Länge (k) als auch über den zweiten Abschnitt der Gesamtlänge (L) erstreckt.

5. Stufenwerkzeug, **dadurch gekennzeichnet, daß** das Stufenwerkzeug durch die Verbindung von mindestens zwei mit identischen zweiten Abschnitten (1) und Zahnabständen (as), jedoch mit unterschiedlichem Durchmesser (D1 und D2) ausgebildeten Umfangsfräsern (3) und (4) nach Anspruch 4 auf der gleichen Drehachse (O) gebildet wird.

6. Vorrichtung zur Bearbeitung von Längskanten an einem Werkstück, insbesondere von tangentialen Teilbereichen von gekrümmten Fahrflächenprofilen von Bahnschienen, mit einem Umfangsfräser nach dem Anspruch 4 und/oder einem Stufenwerkzeug nach dem Anspruch 5.

## Claims

1. Method for machining longitudinal edges of metal workpieces (2) using a circumferential milling cutter (1) having at least one spiral-shaped cutting edge, the at least one cutting edge (z) of the circumferential milling cutter contacting a machining surface (B) of the workpiece (2) with a plurality of teeth simultaneously, **characterised in that** the plurality of teeth, acting in the feed direction, of the at least one cutting edge simultaneously contact the machining surface (B) at regular intervals (aₛ), and **in that**, during the machining of the workpiece (2), all of the cutting edges (z) are brought into engagement with the machining surface (B) over an effective length (I) and at an equal cutting depth (t), and the chips (s) in each case are removed over a length of the workpiece (2), which corresponds to the tooth interval (aₛ), between the adjacent teeth simultaneously with the movement thereof along the effective length (I) in the feed direction.

2. Method according to claim 1, **characterised in that** the movement speed (v_{z}) of the cutting edges of the circumferential milling cutter (1) is lower than the feed speed (L_{g}).

3. Method according to claim 1, **characterised in that** the movement speed (v_{z}) of the cutting edges of the circumferential milling cutter (1) is higher than the feed speed (L_{g}).

4. Circumferential milling cutter (1) for machining longitudinal edges of metal workpieces (2), having an axis of rotation (O), a total length (L) and at least one spiral-shaped cutting edge (z), it being possible for the at least one cutting edge (z) of the circumferential milling cutter to contact a machining surface (B) of a workpiece (2) with a plurality of teeth of the at least one cutting edge (z) simultaneously, **characterised in that** the circumferential milling cutter (1) is conical over a first length (k) of the total length (L) and is cylindrical in a second portion of the total length (L), the diameter (D) of the circumferential milling cutter (1) in the second portion (I) of the total length (L) corresponding to the maximum diameter in the region of the first length (k), and the at least one cutting edge (z) extending both over the first length (k) and over the second portion of the total length (L).

5. Stepped tool, **characterised in that** the stepped tool is formed by connecting at least two circumferential milling cutters (3) and (4) according to claim 4, which have identical second portions (I) and tooth intervals (aₛ) but different diameters (D1 and D2), on the same axis of rotation (O).

6. Device for machining longitudinal edges on a workpiece, in particular tangential portions of curved travel surface profiles of railway tracks, comprising a circumferential milling cutter according to claim 4 and/or a stepped tool according to claim 5.

## Revendications

1. Procédé d'usinage de bords longitudinaux de pièces métalliques (2) à l'aide d'une fraise à surfacer (1) munie d'au moins une arête tranchante de réalisation hélicoïdale, une surface d'usinage (B) de la pièce (2) étant mise simultanément en contact avec plusieurs dents, par ladite arête tranchante (z) à présence minimale sur ladite fraise à surfacer, **caractérisé par le fait que** la surface d'usinage (B) est mise simultanément en contact, selon des espacements réguliers (aₛ), avec les multiples dents de ladite arête tranchante à présence minimale qui agissent dans la direction d'avance; et **par le fait que**, durant l'usinage de ladite pièce (2), toutes les arêtes tranchantes (z) sont mises en prise avec ladite surface d'usinage (B) sur une longueur opérante (1) et avec une profondeur de coupe (t) identique, et la séparation des copeaux (s) a respectivement lieu, dans la direction d'avance, sur une longueur de ladite pièce (2) qui correspond à l'espacement (aₛ) des dents, entre les dents voisines et en simultanéité avec le mouvement de ces dernières le long de ladite longueur opérante (1).

2. Procédé selon la revendication 1, **caractérisé par le fait que** la vitesse de mouvement (V_{z}) des tranchants de la fraise à surfacer (1) est conçue pour être inférieure à la vitesse d'avance (L_{g}).

3. Procédé selon la revendication 1, **caractérisé par** le fait la vitesse de mouvement (V_{z}) des tranchants de la fraise à surfacer (1) est conçue pour être supérieure à la vitesse d'avance (L_{g}).

4. Fraise à surfacer (1) dévolue à l'usinage de bords longitudinaux de pièces métalliques (2), présentant un axe de rotation (O) et une longueur totale (L), ainsi qu'au moins une arête tranchante (z) de réalisation hélicoïdale, une surface d'usinage (B) d'une pièce (2) pouvant être mise simultanément en contact, par ladite arête tranchante (z) à présence minimale sur ladite fraise à surfacer, avec plusieurs dents de ladite arête tranchante (z) à présence minimale, **caractérisée par le fait que** ladite fraise à surfacer (1) est de réalisation tronconique sur une première longueur (k) de la longueur totale (L), et cylindrique sur un second tronçon de ladite longueur totale (L), sachant que le diamètre (D) de ladite fraise à surfacer (1) correspond, sur ledit second tronçon (1) de la longueur totale (L), au diamètre maximal dans la région de ladite première longueur (k), et sachant que ladite arête tranchante (z), à présence minimale, s'étend aussi bien sur ladite première longueur (k), que sur ledit second tronçon de la longueur totale (L).

5. Outil étagé, **caractérisé par le fait que** ledit outil étagé est formé par la liaison, sur le même axe de rotation (O), d'au moins deux fraises à surfacer (3) et (4) conformes à la revendication 4, présentant des seconds tronçons (1) et des espacements (aₛ) entre dents identiques, mais des diamètres (D1 et D2) différents.

6. Dispositif affecté à l'usinage de bords longitudinaux sur une pièce, notamment de régions partielles tangentielles de profils de surfaces de roulement curvilignes de rails ferroviaires, à l'aide d'une fraise à surfacer conforme à la revendication 4 et/ou d'un outil étagé conforme à la revendication 5.
